# EUROPÄISCHE PATENTANMELDUNG

(11) **EP 1 616 471 A2**
(43) Veröffentlichungstag der Anmeldung: **18.01.2006**
(21) Anmeldenummer: 05013548.2
(22) Anmeldetag: 23.06.2005
(51) Int. Cl.: A01B 73/04, A01B 63/22

(54) **Hydraulische Betätigungsvorrichtung für eine landwirtschaftliche Bearbeitungsmachine**

(30) Priorität: 01.07.2004 DE 102004031821
(71) Anmelder: Amazonen-Werke H. Dreyer GmbH & Co. KG, 49205 Hasbergen (DE)
(72) Erfinder: Pokriefke, Michael, 277798 Hude (DE)

(57) **Zusammenfassung**

Hydraulische Betätigungsvorrichtung für eine landwirtschaftliche Bearbeitungsmaschine mit aus einer Mittelsektion und beidseitig an dieser angelenkten Seitensektion bestehenden Teilsektionen, wobei jede der drei Teilsektionen ein Bearbeitungsteil und ein zugeordnetes Tiefenführungsmittel aufweist, wobei das Bearbeitungsteil und das zugeordnete Tiefenführungsmittel mittels zwischen ihnen angeordneter doppeltwirkender Hydraulikzylinder zueinander ein- und verstellbar sind, wobei die Hydraulikzylinder eine Kolbenzylindereinheit aufweisen, deren Kolben mit einer aus dem Zylinder herausgeführten Kolbenstange versehen ist, wobei die Kolbenräume der Hydraulikzylinder sämtlicher Teilsektionen über Leitungen in Reihenschaltung miteinander verbunden sind und über ein erstes doppeltwirkendes Steuergerät an eine Hydraulikanlage angeschlossen sind, wobei jeweils zwischen einer Seitensektion und der Mittelsektion zumindest ein doppeltwirkender Hydraulikzylinder zum Ein- und Ausklappen der Seitensektionen gegenüber der Mittelsektion angeordnet ist. Um in einfacher Weise den Hydraulikkreislauf für die hydraulische Betätigungseinrichtung der landwirtschaftlichen Maschine zu vereinfachen und zu verbessern, dahingehend dass automatisch beim dem Ein- und Ausklappvorgang der Einzieh- und Ausfahrvorgang der Tiefenführungsmittel mit ausgeführt wird, ist vorgesehen, dass die zwischen den Seitensektion und der Mittelsektion angeordneten Hydraulikzylinder mittels Leitungen an ein weiteres doppeltwirkendes Steuergerät der Hydraulikanlage angeschlossen sind, dass die die Hydraulikzylinder zum Einklappen der Seitensektionen beaufschlagende Leitung mit der die Tiefenführungsmittel einziehenden Hydraulikzylinder beaufschlagenden Leitungen verbunden ist, dass die die Hydraulikzylinder zum Ausklappen der Seitensektion beaufschlagenden Leitungen mit der die Tiefenführungsmittel ausfahrenden Hydraulikzylinder beaufschlagenden Leitungen verbunden ist.

## Beschreibung

Die Erfindung betrifft eine hydraulische Betätigungsvorrichtung für eine landwirtschaftliche Bearbeitungsmaschine gemäß des Oberbegriffes des Patentanspruches 1.

Derartige Betätigungsvorrichtungen für landwirtschaftliche Bearbeitungsmaschinen mit großer Arbeitsbreite, deren Telsektionen um in Fahrtrichtung verlaufende Achsen von Arbeitsstellung in Transportstellung eingeklappt werden, sind in der Praxis bekannt. Durch das Einklappen der Teilsektionen lässt sich die Breite der Maschine zum Transport reduzieren. Selbst durch das Senkrechtstellen der Seitensektion weisen einige Maschine noch eine derartige Breite auf, die die zulässige Transportbreite von 3 m auf öffentlichen Strassen und Wegen überschreitet. Um dennoch bei derartigen Maschinen auf eine Transportbreite unter 3 m zu kommen, müssen über einen separaten Hydraulikkreislauf mit einem eigenen Streuventil mittels zwischen den Tiefenführungsmitteln und dem Rahmen der Teilsektionen angeordneten Hydraulikzylinder die Tiefenführungsmittel eingezogen werden. Nun kann es vorkommen, dass der Bediener bzw. Fahrer des die Bearbeitungsmaschine ziehenden Ackerschleppers nach dem Einklappen, d.h. im Senkrechtstellen der Teilsektion vergisst, dass weitere Steuerventil für den weiteren Hydraulikkreislauf zum Einziehen der Tiefenführungsmittel zu betätigen, so dass die Maschine nicht auf die zulässige Transportbreite gebracht wird. Ebenfalls kann beim Bringen der Maschine von Transport- in Arbeitsposition auch vergessen werden, die Tiefenführungsmittel vor dem Ausklappen wieder auszufahren, so dass es zu Beschädigungen an der Maschine kommt.

Der Erfindung liegt die Aufgabe zugrunde, in einfacher Weise den Hydraulikkreislauf für die hydraulische Betätigungseinrichtung der landwirtschaftlichen Maschine zu vereinfachen und zu verbessern, und zwar dahingehend dass automatisch beim dem Ein- und Ausklappvorgang der Einzieh- und Ausfahrvorgang der Tiefenführungsmittel mit ausgeführt wird.

Diese Aufgabe wird erfindungsgemäß durch die kennzeichnenden Merkmale des Patentanspruches 1 gelöst. Infolge dieser Maßnahmen werden durch das Einschleifen des Kreises zum Ein- und Ausziehen der Tiefenführungsmittel in den Einklapp- und Ausklappkreislauf die Tiefenführungsmittel automatisch in die jeweils richtige Position gebracht.

Um in einfacher Weise die Tiefenführungsmittel der Mittelsektion als Fahrwerk der landwirtschaftlichen Bearbeitungsmaschine nutzen zu können, ist vorgesehen, dass die Tiefenführungsmittel der Mittelsektion aus an einem Rahmen aus mehreren an einem Tiefenführungsrahmen angeordneten Reifenelementen bestehen, dass die mittleren Reifenelemente gegenüber den seitlichen Reifenelemente mittels zumindest eines doppeltwirkendenden Hydraulikzylinders anhebbar und auf gleiches Niveau bringbar sind, und dass die die Hydraulikzylinder zum Einklappen der Seitensektionen beaufschlagende Leitung mit der die mittleren Reifenelemente anhebbaren Hydraulikzylinder beaufschlagenden Leitungen verbunden ist, dass die die Hydraulikzylinder zum Ausklappen der Seitensektion beaufschlagenden Leitungen mit der die mittleren Reifenelemente auf Niveau bringenden Hydraulikzylinder beaufschlagenden Leitungen verbunden ist.

Weitere Einzelheiten der Erfindung sind der Beispielsbeschreibung und den Zeichnungen zu entnehmen. Hierbei zeigen
- Fig. 1: die Bearbeitungsmaschine in Arbeitsstellung und in Rückansicht,
- Fig. 2: die Bearbeitungsmaschine in Transportstellung vor Einziehung der seitlichen Tiefenführungsmittel in der Rückansicht,
- Fig. 3: die Bearbeitungsmaschine in Transportstellung nach Einziehung der Tiefenführungsmittel in der Rückansicht,
- Fig. 4: den Hydraulikschaltplan für eine zweiteilig ausgebildete Bearbeitungsmaschine mit dreiteilig ausgebildetem Tiefenführungsmittel in der Rückansicht und

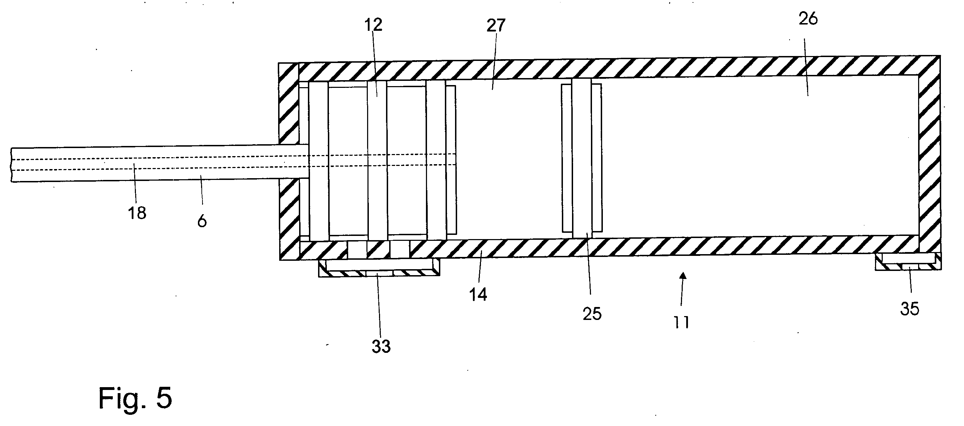

- Fig. 5: den Masterzylinder in Schnittdarstellung.

Landwirtschaftliche Bearbeitungsmaschinen für größere Arbeitsbreiten bestehen aus mehreren quer zur Fahrtrichtung nebeneinander angeordneten Teilsektion 1 und 2, um auch bei größeren Arbeitsbreiten die Maschine in einfacher Weise durch Einklappen der Teilsektionen 1 und 2 in eine schmalere Transportposition bringen zu können. Die Teilsektionen 1 und 3 sind mittels Gelenke, deren Gelenkachsen in Fahrtrichtung weisen, an einem Zentralrahmen 3 schwenkbar angelenkt. Hierbei ist den Teilsektionen 1 und 2 zumindest ein Tiefenführungsmittel 4, beispielsweise in Form einer Bodenwalze, zugeordnet. Die Tiefenführungsmittel 4 sind über Lenker gelenkig und in Höhenrichtung bewegbar gegenüber dem in der Eindringtiefe im Boden zu führenden Bodenbearbeitungswerkzeugen 5 aufweisenden Teilsektionen 1 und 2 und/oder Zentralrahmen 3 angeordnet. Die an den Teilsektionen 1 und 2 angelenkten seitlichen Tiefenführungsmittel 4 weisen eine geringe Breite als die Teilsektionen 1 und 2 auf. Zwischen den seitlichen Tiefenführungsmittel 4 ist das mittlere Tiefenführungsmittel 4, ebenfalls als Bodenwalze ausgebildet, mittels Lenker an dem Zentralrahmen 3 angeordnet. Das mittlere Tiefenführungsmittel 4 weist den Walzenrahmen 6' auf. An dem Walzenrahmen 6' sind zwei seitliche Walzenelemente 7' drehbar gelagert. Zwischen den seitlichen Walzenelementen 7' ist ein Schwenkrahmen 8 an dem Walzenrahmen 6' mittels Gelenke angeordnet. An dem Schwenkrahmen 8 sind die mittleren Walzenelemente 7" drehbar gelagert. Zwischen dem Walzenrahmen 6' und dem Schwenkrahmen 8 ist der doppeltwirkende Hydraulikzylinder 9 angeordnet. Mittels des Hydraulikzylinders 9 werden die mittleren Walzenelemente 7" durch Verschwenken des Schwenkrahmens 8 gegenüber dem Walzenrahmen 6' aus ihrer unteren, auf gleichem Niveau wie die seitlichen Walzenelemente 7', in die dargestellte Transportposition verschwenkt, so dass die Maschine während des Transports in Transportstellung sich nur auf die seitlichen Walzenelemente 7' abstützt. Zwischen den Teilsektionen 1, 2 sowie dem Zentralrahmen 3 und den Rahmen 6 und 6' der Tiefenführungsmittels 4 und 4' sind doppeltwirkende Hydraulikzylinder 10, 10' bzw. 11 angeordnet, so dass das Bodenbearbeitungsteil 1, 2 und das zugeordnete Tiefenführungsmittel 4 zueinander ein- und verstellbar sind. Die Hydraulikzylinder 10, 10', 11 weisen eine Kolbenzylindereinheit auf, deren Kolben 12,13,13' jeweils mit einer aus dem Zylinder 14, 15, 15' herausgeführten Kolbenstange 16,17,17' verbunden sind. Wie noch weiter unten erläutert wird, sind die Kolbenräume der Hydraulikzylinder 10,10', 11 sämtlicher Teilsektionen 1, 2 über Leitungen in Reihenschaltung miteinander verbunden und mittels der beiden Leitungen 18, 19 an ein doppeltwirkendes, nicht dargestelltes Steuergerät, einer Hydraulikanlage, beispielsweise eines Ackerschleppers angeschlossen.

Zwischen jeder Teilsektion 1 bzw. 2 und dem Zentralrahmen 6 ist jeweils ein doppeltwirkender Hydraulikzylinder 20 angeschlossen. Mittels dieser Hydraulikzylinder können die Teilsektionen 2, 3 um die in Fahrtrichtung verlaufenden Gelenkachsen der Gelenke aus der liegenden Arbeitsstellung in die aufrechte Transportstellung eingeschwenkt werden. Die Hydraulikzylinder 20 und der Hydraulikzylinder 9 sind über die beiden Leitungen 21 und 22 an ein nicht dargestelltes doppeltwirkendes Steuergerät einer Hydraulikanlage, beispielsweise eines Ackerschleppers angeschlossen. Hierbei sind die beiden Leitungen 23, 24 des Hydraulikzylinders 9 jeweils über ein Abzweigstück mit den Leitungen 21, 22 der Hydraulikzylinder 20 verbunden.

Der eine Zylinder 11 ist als sogenannter Masterzylinder und die beiden anderen Zylinder 10, 10' sind als sogenannte Slavezylinder ausgebildet. Der Masterzylinder 11, der in Fig. 6 im Schnitt dargestellt ist, weist einen durch den zusätzlichen schwimmenden Kolben 25 geschaffenen Memory-Kolbenraum 26 auf. Der Masterzylinder 11 weist das Zylindergehäuse 14 auf, in dem die aus dem Gehäuse 14 herausgeführte Kolbenstange 16 mit dem daran befestigten Kolben 12 angeordnet ist. Weiterhin ist, wie erwähnt, der schwimmende Kolben 25 in dem Gehäuse 14 angeordnet ist. Die Slavezylinder 10, 10' weisen die Zylindergehäuse 15, 15' und die aus dem Gehäusen 15, 15' herausgeführten Kolbenstangen 17, 17' mit dem daran angeordneten Kolben 13, 13' auf. Die Zylinder 10, 10' und 11 sind über die Leitungen 18 und 19 über ein erstes doppeltwirkendes Steuergerät an die Hydraulikanlagen eines Ackerschleppers angeschlossen. Durch die Kolbenstange 16 und den an der Kolbenstange 16 angeordneten Kolben 12 ist eine Hydraulikleitung 18 angeordnet, die an das erste Steuergerät der Hydraulikanlage angeschlossen ist und andererseits in dem Kolbenraum 27 des Masterzylinders 11 mündet. Die andere an dem ersten Steuergerät angeschlossene Hydraulikleitung 19 ist an den Kolbenraum 28, in dem sich die Kolbenstange 17 des Slavezylinders 10 befindet, angeschlossen. Die Kolbenkammer 29 des Slavezylinders 10', durch welche die Kolbenstange nicht geführt ist, ist über eine Leitung 30 mit dem Kolbenraum 3 des Slavezylinders 10', durch welche die Kolbenstange 17' geführt ist, angeschlossen.

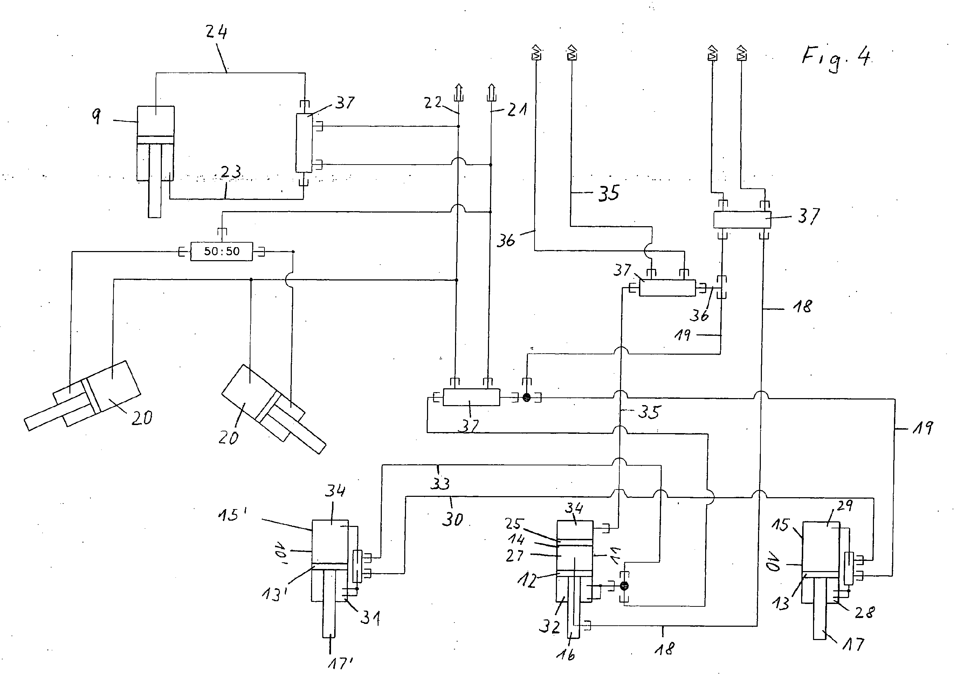

Der Kolbenraum 32 des Masterzylinders 11 ist über die Leitung 33 mit dem Kolbenraum 34 des Slavezylinders 15' verbunden. Somit sind der Masterzylinder 11 und die Slavezylinder 10 und 10' durch die entsprechende Anordnung der Leitungen in Reihenschaltung angeordnet. Hierdurch kann gemäß dem Hydraulikschaltplan nach Fig. 4 analog über die Beaufschlagung der Leitungen 18 und 19 der entsprechenden Kolbenräume der Masterzylinder 11 und Slavezylinder 10 und 10' das Bodenbearbeitungsgerät ausgehoben und abgesenkt werden, während über das Steuergerät durch die entsprechende Füllung der Memorykammer 34 des Masterzylinders 11 der Hubweg der Kolbenstangen 16, 17 und 17' und somit die Arbeitstiefe der Bodenbearbeitungswerkzeuge entsprechend eingestellt werden.

Die Kolbenstange 16 und der an ihr befestigte Kolben 12 des Masterzylinders 11 weist eine sich in Längsrichtung der Kolbenstange 16 erstreckende Leitung 18 auf, an die die mit der Hydraulikanlage verbundene Leitung 18 angeschlossen ist und in dem Kolbenraum 27 mündet, über diese Leitung 8 ist der sich zwischen der an der Kolbenstange 16 angeordnete Kolben 12 und den schwimmenden Kolben 25 befindliche Kolbenraum 27 mit Hydraulikflüssigkeit zu befüllen und entleeren, und so die Kolbenstange 16 zu bewegen, um die Tiefenführungsmittel 4, 4' gegenüber dem Bearbeitungsteil 5 zu verstellen.

Der Memory-Kolbenraum 34 ist über eine erste zusätzliche Leitung 35 an ein weiteres nicht dargestelltes doppelt wirkendes Steuergerät einer Hydraulikanlage, beispielsweise des Ackerschleppers angeschlossen. Die an dem ersten Steuergerät angeschlossene, nicht an den Masterzylinder 11 angeschlossene Leitung 19 ist mit der zweiten zusätzlichen Leitung 36 des weiteren Steuergeräte, dessen andere Leitung 35 an dem Memory-Kolbenraum 34 des Masterzylinders 11 angeschlossen ist, angeschlossen. Diese zweite zusätzliche Leitung 36 ist ebenfalls an die Hydraulikanlage, beispielsweise des Ackerschleppers angeschlossen.

Zusätzlich kann in den Leitungen, wie in Fig. 4 gezeigt, jeweils ein schematisch dargestellter Sperrblock 37 vorgesehen sein, um eine sichere Absperrung der Hydraulikleitungen gegenüber evtl. nicht ganz dicht ohne Leckverluste absperrende Hydrauliksteuergeräte des Schleppers zu vermeiden.

Die Querschnitte der Zylinder 10' und 11 sind so aufeinander abgestimmt, dass die Kolbenstange jeweils gleichlange Hübe ausführen.

Die Funktionsweise ist folgende:

Um die Arbeitstiefe einzustellen, das heißt den Hubweg der Kolbenstange 16 des Masterzylinders 11 festzulegen, wird über das an die Leitungen 35 und 36 angeschlossene Steuergerät die Memorykammer 34 mit einer entsprechenden Ölmenge gefüllt. Wenn der Hubweg verkleinert werden soll, wird über die Leitung 35 Öl in die Memorykammer 34 gedrückt, der Kolben 12 mit der Kolbenbremse 16 verschoben, gleichzeitig strömt Öl aus der Kammer 32 über die Leitung 33 in die Kolbenkammer 34 des Slavezylinders 10'. Gleichzeitig wird der Kolben 13' mit der Kolbenstange 17' verschoben und Hydrauliköl strömt aus der Kammer 31 über die Leitung 30 in der Kolbenkammer 29. Hierdurch wird der Kolben 13 mit der Kolbenstange 17 verschoben. Hierdurch strömt Hydrauliköl aus der Kolbenkammer 28 und die Leitung 21 in die Hydraulikanlage zurück. Wenn der Hubweg des Masterzylinders 11 entsprechend eingestellt ist, wird das Steuergerät in Neutralstellung gestellt. Somit ist auch gleichzeitig der Hubweg der Slavezylinders 10 und 10' eingestellt. Falls ein Sperrblock 37 in den Leitungen 21 und 22 und 22 angeordnet ist, wird dieser in Sperrstellung gebracht, so dass sicher gestellt ist, dass kein Öl aus der Memorykammer 34 oder der Kammer 17 über die Leitung in das Hydrauliksystem der Hydraulikanlage zurück strömen kann.

Wenn die Maschine ausgehoben werden soll, bzw. die Bodenbearbeitungswerkzeuge gegenüber den Tiefenführungselementen angehoben werden, wird über das weitere Steuergerät und die Leitung 18 Hydrauliköl in die Kammer 27 gedrückt. Gleichzeitig wird der Kolben 12 und die Kolbenstange 16 ausgefahren. Gleichzeitig wird Öl aus der Hydraulikkammer 32 über die Leitung 33 in den Kolbenraum 34 des Slavezylinders 10' gedrückt. Hierzu wird der Kolben 13' mit der Kolbenstange 17'ausgefahren. Gleichzeitig strömt Öl aus der Kammer 31 über die Leitung 30 in der Kammer 29 des Slavezylinders 10. Hierdurch wird der Kolben 13 beweglich und die Kolbenstange 17 ausgefahren. Das Öl aus der Kammer 28 strömt über die Leitung 19 in die Hydraulikanlage zurück.

Wenn die Kolben 12, 13 und 13' ihre Endlagen erreicht haben, wird das Steuerventil in Neutralstellung gebracht.

Wenn die Bodenbearbeitungswerkzeuge gegenüber den Tiefenführungselementen abgesenkt sollen, insbesondere in Arbeitstellung gebracht werden sollen, wird das weitere Steuerventil geschaltet, so dass Öl aus der Hydraulikanlage über die Leitung 19 in den Slavezylinder 10 gedrückt wird. Hierbei wird der Kolben 13 und die Stange 17 eingefahren. Hierbei wird dann Öl aus der Kolbenkammer 29 über die Leitung 30 in die Kolbenkammer 31 gedrückt. Hierdurch wird der Kolben 13' mit der Kolbenstange 17' des Slavezylinders 10' gedrückt der Kolben 13' und die Kolbenstange 17' werden eingezogen. Hierdurch das Öl aus der Kolbenkammer 34 über die Leitung 33 in die Kammer 32 des Masterzylinders 11 gedrückt. Somit werden der Kolben 12 und die Kolbenstange 16 ebenfalls eingezogen. Hierdurch wird Öl aus der Kammer 27 über die Leitung 18 in die Hydraulikanlage des Ackerschleppers zurückgedrückt. Der Kolben 1 kann so lange verfahren werden, bis der Kolben 12 an den Kolben 27, der die Kolbenkammer 27 von der Memorykammer 34 trennt, zur Anlage kommt. Somit wird also über die Lage des Kolbens 25 in dem Masterzylinder 11 der Hubweg der Kolbenstangen 16', 17' und 17' und somit die Arbeitslage des jeweiligen Bearbeitungsteils gegenüber dem Tiefenführungsteil bestimmt.

Das Sperrventil 37 muss selbstverständlich, wenn das Ventil geschaltet wird, um die Kolbenstange 16, 17 und 17' zu verfahren, geöffnet sein. Der Sperrblock 37 ist insbesondere dann in den Leitungen angeordnet, wenn die Gefahr besteht, dass die Ventilelemente des Steuerventils nicht völlig dicht schließen. Dieses ist besonders wichtig wenn die Bearbeitungsmaschine auf der Straße während des Transports bewegt wird, damit sie nicht absinken kann.

Die Leitung 21 und 22 sind an ein drittes Steuerventil der Hydraulikanlage angeschlossen. Die Leitungen 21 und 22 sind über Abzweigelemente mit den Leitungen 23 und 24, die an dem Hydraulikzylinder 9 angeschlossen sind, verbunden. Des weiteren sind die Leitungen 21 und 22 über Abzweigungen mit den Leitungen 38 und 39, die an die Hydraulikzylinder 20 zum Ein- und Ausklappen der Teilsektionen 1 und 2 dienen verbunden. Des weiteren ist die Leitung 21 über den Sperrblock 37 mit der Leitung 19 des Kreislaufes zum Ein- und Ausfahren der den Tiefenführungsmitteln 4 und 4' zugeordneten Hydraulikkreislauf verbunden. Die Leitung 22 ist über den Sperrblock 37 mit der Leitung 33 des Hydraulikkreislaufs zum Ein- und Ausfahren der Tiefenführungsmittel 4 und 4' verbunden. Somit wird also der Klappkreis zum Einfahren der Seitenräder in den Hydraulikkreislauf zum Ein- und Ausfahren des Fahrwerks eingeschleift.

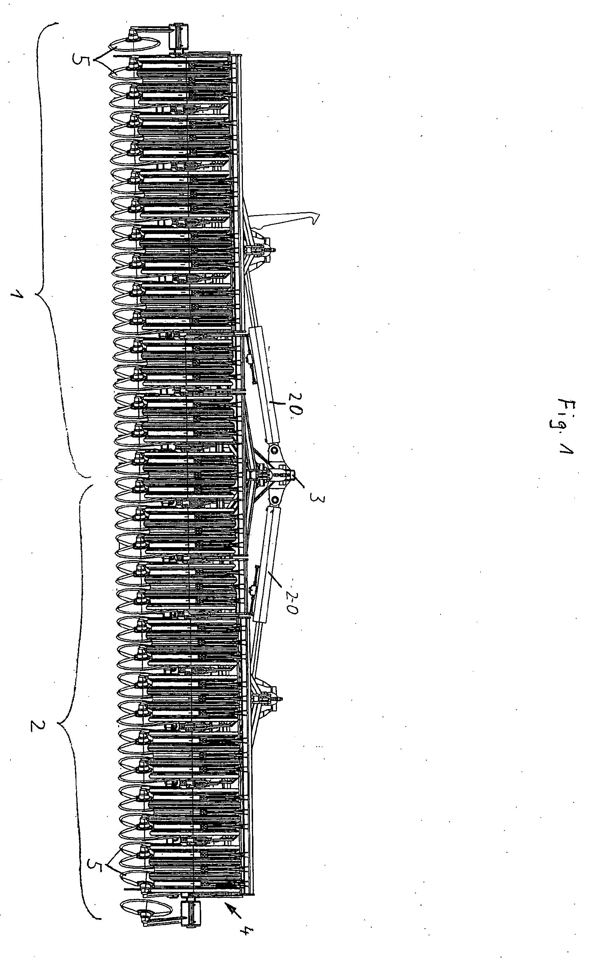

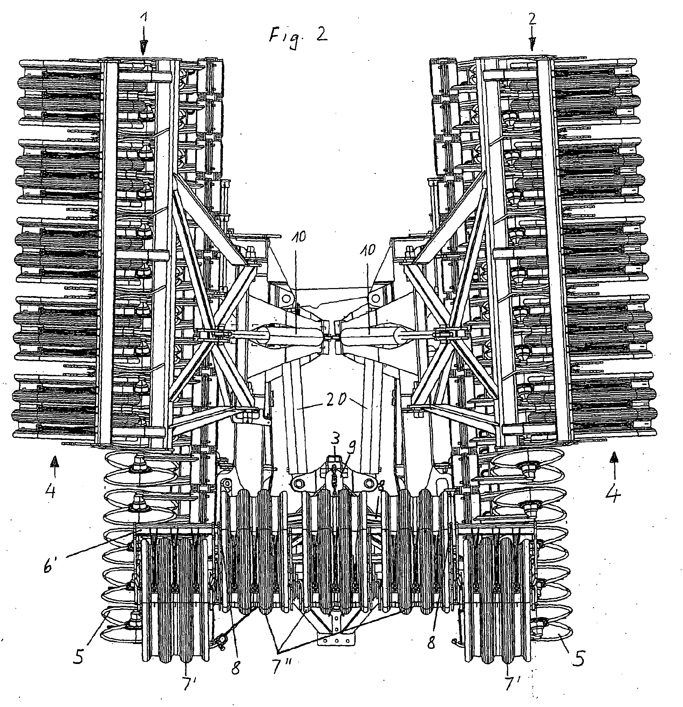

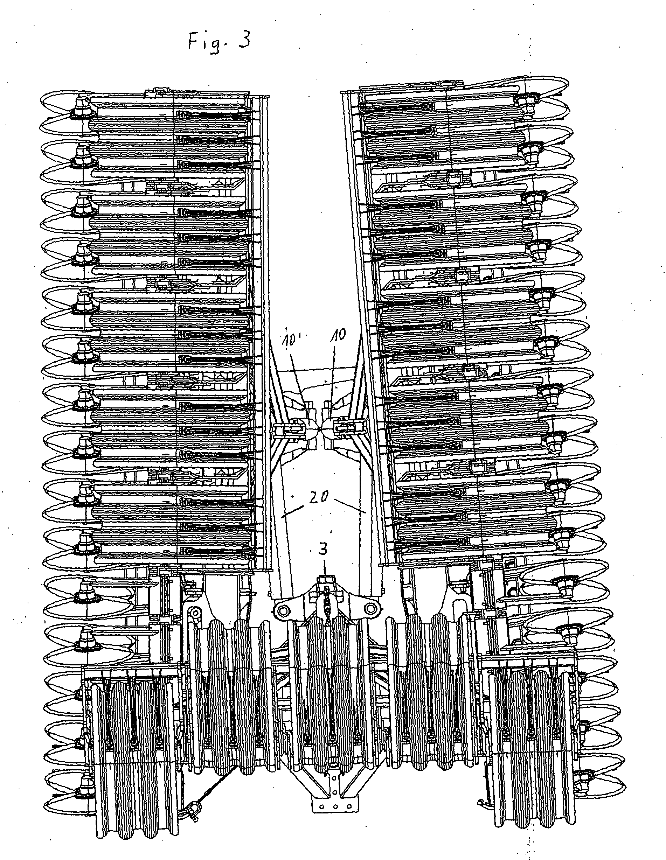

Die Funktionsweise ist folgende: Wenn die Maschine von der Transportstellung gemäß Fig. 1 in die Transportstellung gemäß Fig. 3 über die Zwischenstellung über Fig. 2 gebracht werden soll, wird das doppelt wirkende Steuerventil, an welchem die Leitung 21 und 22 angeschlossen sind, in eine derartige Stellung gebracht, dass die Leitung 21 mit Druck beaufschlagt wird. Hierdurch werden die Hydraulikzylinder 20 zum Einklappen der Teilsektionen 1 sowie der Hydraulikzylinder 9, der die mittleren Walzenelemente 7' der Tiefenführungselemente 4' einfährt, mit Druck beaufschlagt. Somit wird also die Bodenbearbeitungsmaschine wie in Fig. 2 dargestellt, in die Zwischenposition gebracht. Wenn die Hydraulikzylinder 20 und der Hydraulikzylinder 9 eingefahren sind, wird anschließend über den Sperrblock 37 die Leitung 19 von der Leitung 21 ebenfalls mit Druck beaufschlagt, so dass die Kolben 13 und die Kolbenstange 17 des Slavezylinders 10 und der Kolben 13' und die Kolbenstange 17' des Slavezylinders 10' eingefahren werden. Hierdurch schwenken die zunächst noch über die zusätzliche Transportbreite A, welche durch die äußeren Teile der Bodenbearbeitungswerkzeuge der Bodenbearbeitungsmaschine bestimmt wird, überstehende Tiefenführungselemente 4 aus der in Fig. 2 dargestellten Position in die in Fig. 3 dargestellte Position, so dass sie über die zulässige Transportbreite T nicht mehr hinaus stehen. Dass aus den Kammern 29 ausströmende Öl gelangt über die Leitung 30 in Kolbenkammer 31. Das aus der Kammer 34 ausströmende Öl gelangt über die Leitung 33 und über das Abzweigstück in die Leitung 38 und über den Sperrblock 37 in die Leitung 22 und somit in die Hydraulikanlage zurück. Die Kolbenstange 16 des Masterzylinders 11 wird nicht verfahren, weil über die Leitung 18 kein Öl in die Hydraulikanlage zurückströmen kann, weil das den Leitungen 18 und 19 zugeordnete Sperrventil nicht gestaltet wird und zusätzlich über den zugeordneten Sperrblock 37 die Leitung abgesperrt sind. Es kann kein Öl aus der Kolbenkammer 27 des Masterzylinders 11 herausströmen. Hierdurch bleiben die Walzenelemente 7' in der nach unten gedrückten Position, so dass das Bodenbearbeitungsgerät auf diesen Walzenelementen 7' transportiert werden kann.

Das Ausklappen der Teilsektionen aus der in Fig. 3 dargestellten Position in die Fig. 1 dargestellte Arbeitsstellung geschieht in umgekehrter Reihenfolge in dem über das den Leitungen 21 und 22 zugeordnete Steuerventil der Hydraulikanlage die Leitung 22 mit Druck beaufschlagt wird und die Leitung 21 drucklos geschaltet ist. Hierdurch strömt dann Öl in die Leitung 22 und die Leitung 24 in die Kammer des Hydraulikzylinders 9, so dass der mittlere Bereich 7' der Tiefenführungselemente abgesenkt wird. Weiterhin wird die Kolbenkammer der Hydraulikzylinder 20 mit Druck beaufschlagt, so dass die Kolbenstangen der Hydraulikzylinder 20 ausfahren werden und somit die Teilsektionen aus der Transport- in die Arbeitsstellung schwenken. Gleichzeitig wird entsprechend der jeweiligen Kraft- und Druckverhältnisse Öl aus der Leitung 22 in Leitung gedrückt. Hierdurch wird über das Verbindungsstück Öl in die Leitung 33 und somit in die Kolbenkammer 34 des Slavezylinders 10' gedrückt. Hierdurch fährt die Kolbenstange 17' aus und schwenkt das zugeordnete Tiefenführungsmittel nach außen. Gleichzeitig wird Öl aus der Kammer 31 verdrängt und gelangt über die Leitung 33 in Kolbenkammer 29 des Slavezylinders 10. Hierdurch wird die Kolbenstange 17 ausgefahren und das zugeordnete Tiefenführungsmittel ausgeschwenkt bzw. nach unten gedrückt. Hierdurch fließt Öl aus der Kammer 28 über die Leitung 19 und das Verbindungsstück sowie den Sperrblock 37 über die Leitung 21 in die Hydraulikanlage zurück. Nach Abschluss des Ausklappens und Absenkens der Teilsektion und der Tiefenführungselemente wird das den Leitungen 21 und 22 zugeordnete Steuergerät in Neutralstellung gebracht. Ebenfalls schalten die Sperrblöcke 37 in Sperrstellung.

## Patentansprüche

1. Hydraulische Betätigungsvorrichtung für eine landwirtschaftliche Bearbeitungsmaschine mit aus einer Mittelsektion und beidseitig an dieser angelenkten Seitensektion bestehenden Teilsektionen, wobei jede der drei Teilsektionen ein Bearbeitungsteil und ein zugeordnetes Tiefenführungsmittel aufweist, wobei das Bearbeitungsteil und das zugeordnete Tiefenführungsmittel mittels zwischen ihnen angeordneter doppeltwirkender Hydraulikzylinder zueinander ein- und verstellbar sind, wobei die Hydraulikzylinder eine Kolbenzylindereinheit aufweisen, deren Kolben mit einer aus dem Zylinder herausgeführten Kolbenstange versehen ist, wobei die Kolbenräume der Hydraulikzylinder sämtlicher Teilsektionen über Leitungen in Reihenschaltung miteinander verbunden sind und über ein erstes doppeltwirkendes Steuergerät an eine Hydraulikanlage angeschlossen sind, wobei jeweils zwischen einer Seitensektion und der Mittelsektion zumindest ein doppeltwirkender Hydraulikzylinder zum Ein- und Ausklappen der Seitensektionen gegenüber der Mittelsektion angeordnet ist, **dadurch gekennzeichnet, dass** die zwischen den Seitensektion und der Mittelsektion angeordneten Hydraulikzylinder mittels Leitungen an ein weiteres doppeltwirkendes Steuergerät der Hydraulikanlage angeschlossen sind, dass die die Hydraulikzylinder (20) zum Einklappen der Seitensektionen (1, 2) beaufschlagende Leitung (21) mit der die Tiefenführungsmittel (4) einziehenden Hydraulikzylinder (17, 17') beaufschlagenden Leitungen (19) verbunden ist, dass die die Hydraulikzylinder (20) zum Ausklappen der Seitensektion (1, 2) beaufschlagenden Leitungen (22) mit der die Tiefenführungsmittel (4) ausfahrenden Hydraulikzylinder (17, 17') beaufschlagenden Leitungen (33) verbunden ist.

2. Betätigungsvorrichtung nach Anspruch 1, **dadurch gekennzeichnet, dass** die Tiefenführungsmittel der Mittelsektion aus an einem Rahmen aus mehreren an einem Tiefenführungsrahmen angeordneten Reifenelementen bestehen, dass die mittleren Reifenelemente (7'') gegenüber den seitlichen Reifenelemente (7') mittels zumindest eines doppeltwirkendenden Hydraulikzylinders (9) anhebbar und auf gleiches Niveau bringbar sind, und dass die die Hydraulikzylinder (20) zum Einklappen der Seitensektionen (1, 2) beaufschlagende Leitung (21) mit der die mittleren Reifenelemente anhebbaren Hydraulikzylinder (9) beaufschlagenden Leitungen (23) verbunden ist, dass die die Hydraulikzylinder (20) zum Ausklappen der Seitensektion (1, 2) beaufschlagenden Leitungen (22) mit der die mittleren Reifenelemente (7'') auf Niveau bringenden Hydraulikzylinder (9) beaufschlagenden Leitungen (24) verbunden ist.
